(19) **Europäisches Patentamt**
**European Patent Office**
**Office européen des brevets**

(11) **EP 1 473 864 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
***H04J 3/06*** *(2006.01)*

(21) Anmeldenummer: **03009550.9**

(22) Anmeldetag: **28.04.2003**

(54) **Kollisionsfreie Übermittlung von Datentelegrammen mittels mindestens eines Repeaters**

Collision-free transmission of datagrams via at least one repeater

Transmission sans collision de datagrammes via au moins un répéteur

(84) Benannte Vertragsstaaten:
**AT DE FR**

(43) Veröffentlichungstag der Anmeldung:
**03.11.2004 Patentblatt 2004/45**

(73) Patentinhaber: **SIEMENS AKTIENGESELLSCHAFT 80333 München (DE)**

(72) Erfinder:
- **Gabler, Michael 93047 Regensburg (DE)**
- **Hänel, Andre 93092 Barbing (DE)**
- **Kinne, Andreas, Dr. 93049 Regensburg (DE)**

(56) Entgegenhaltungen:
**EP-A- 1 288 749     WO-A-00/67103
WO-A-02/28004     DE-A- 19 710 971**

EP 1 473 864 B1

**Beschreibung**

Die Erfindung betrifft ein Verfahren zur Übermittlung von Datentelegrammen zwischen wenigstens zwei Funkgeräten und wenigstens einem Repeater, wobei wenigstens ein Funkgerät auf ein empfangenes Datentelegramm erst nach einer Verzögerungszeit mit einem Datentelegramm antwortet.

Ein Verfahren gemäß Oberbegriff des Anspruchs 1 ist in der KNX-Radio Frequency Specification, Version 10, 30.07.2002, beschrieben, die von der Konnex Association, Brüssel, herausgegeben wurde.

In dieser Veröffentlichung ist ein Repeater (in.Abschnitt 7 als "Retransmitter" bezeichnet) beschrieben, mit dessen Hilfe die Übertragungsreichweite der Funkgeräte vergrößert werden kann. Beim Einsatz des Repeaters kann es im Zusammenhang mit bidirektionalen Funkgeräten während der Übermittlung von Datentelegrammen zu systematischen Kollisionen kommen. Dies tritt insbesondere dann auf, wenn zwei bidirektionale Funkgeräte direkt miteinander kommunizieren und ein Repeater im Funksystem derart angeordnet ist, dass die Kommunikation zwischen wenigstens einem der beiden Funkgeräte und dem Repeater zumindest zeitweise gestört ist. Temporäre Störungen können auftreten, wenn das Funkgerät und der Repeater zu weit voneinander entfernt sind oder wenn aus anderen Gründen die in der Übermittlungsstrecke auftretende Dämpfung zwischen dem Funkgerät und dem Repeater zu groß ist, um eine zuverlässige Übermittlung der Datentelegramme zu ermöglichen.

Bei dem Funksystem gemäß dem Konnex-Standard ist festgelegt, dass ein bidirektionales Funkgerät frühestens nach 15 ms + 0...10 ms Zufalls-Verzögerungszeit (im Abschnitt 5.3.1 als "random delay" bezeichnet) auf den Bus zugreifen darf. Der Repeater greift nach 5 ms + 0...10 ms Zufallszeit auf den Bus zu. Sind alle Funkgeräte zueinander in Funkreichweite, so ist weitgehend sichergestellt, dass keine Kollisionen bei der Übermittlung von Datentelegrammen auftreten, da zuerst der Repeater den Bus belegt. Erst wenn der Repeater den Sendevorgang beendet hat, beginnt eines der Funkgeräte den Sendevorgang. Befinden sich jedoch nicht alle Funkgeräte in Kommunikationsreichweite zum Repeater, tritt das vorstehend geschilderte Problem auf.

Die WO 00/67103 beschreibt eine Möglichkeit, die maximale Kabellänge für eine USB-Verbindung zwischen einem Computer und Peripheriegeräten zu vergrößern, ohne die Signalübertragung zu stören. Zwischen dem Computer und den Peripheriegeräten können mehrere so genannte Hubs angeordnet sein. Durch die Kabel und Hubs können Zeitverzögerungen in der Signalübertragung bewirkt werden, welche vorgegebene Grenzwerte nicht überschreiten dürfen. Hierzu werden an den Kabelenden aktive Schaltungen angebracht, welche die USB-spezifischen Signale in Signale anderer Form umwandeln, übertragen und dann in den USB-Standard zurückwandeln.

Aus der WO 02/28004 A2 ist eine Mess- und Berechnungsmethode bekannt, um Verzögerungszeiten beim Signalaustausch zwischen Zeitinformationssendern und Zeitinformationsempfängern zu bestimmen. Auf diese Weise lassen sich die einzelnen Teilnehmer des Kommunikationsnetzwerks synchronisieren, indem ihnen geeignete Zeitkorrekturwerte bereitgestellt werden. Im Rahmen des Verfahrens sendet der Zeitinformationssender ein Telegramm mit bekannter Telegrammlaufzeit an den Zeitinformationsempfänger und leitet eine Zeitmessung ein. Der Zeitinformationsempfänger sendet ein Antwortsignal an den Zeitinformationssender zurück, der bei Empfang die Zeitmessung stoppt. Aus der gemessenen Antwortzeit, der bekannten Telegrammlaufzeit und der Reaktionszeit des Zeitinformationsempfängers wird die übertragungsbedingte Verzögerungszeit berechnet. Aufgabe der vorliegenden Erfindung ist es deshalb, ein Verfahren der eingangs genannten Art zu schaffen, das auch unter schwierigen Bedingungen eine kollisionsfreie Übermittlung von Datentelegrammen ermöglicht.

Erfindungsgemäß wird die Aufgabe bei einem Verfahren der eingangs genannten Art durch ein Verfahren nach Anspruch 1 gelöst.

Das Funksystem, das nicht Teil der vorliegenden Erfindung ist, ist zur Übermittlung von Datentelegrammen zwischen wenigstens zwei Funkgeräten und wenigstens einem Repeater ausgelegt, wobei wenigstens ein Funkgerät auf ein empfangenes Datentelegramm (Anfragetelegramm) erst nach einer Verzögerungszeit mit einem Datentelegramm (Antworttelegramm) antwortet. Erfindungsgemäß erfüllt die Verzögerungszeit $t_D$ die Bedingung

$$t_D \geq t_B + (t_R + t_T) \cdot n,$$

wobei mit $t_B$ die Buszugriffszeit des Funkgeräts, mit $t_R$ die Buszugriffszeit des Repeaters, mit $t_T$ die Laufzeit eines Datentelegramms mit maximaler Länge und mit $n$ die Anzahl der Repeater bezeichnet ist.

Das Verfahren gemäß Anspruch 1 ist zur Übermittlung von Datentelegrammen zwischen wenigstens zwei Funkgeräten und wenigstens einem Repeater ausgelegt, wobei wenigstens ein Funkgerät auf ein empfangenes Datentelegramm (Anfragetelegramm) erst nach einer Verzögerungszeit $t_D$ mit einem Datentelegramm (Antworttelegramm) antwortet. Erfindungsgemäß erfüllt die Verzögerungszeit $t_D$ die Bedingung

$$t_D \geq t_B + (t_R + t_T) \cdot n,$$

wobei mit $t_B$ die Buszugriffszeit des Funkgeräts, mit $t_R$ die Buszugriffszeit des Repeaters, mit $t_T$ die Laufzeit eines Datentelegramms mit maximaler Länge und mit n die Anzahl der Repeater bezeichnet ist.

Das Funkgerät, das nicht Teil der vorliegenden Erfindung ist, ist zum Empfang und zum Senden von Datentelegrammen ausgelegt, wobei zwischen dem Empfang eines Datentelegramms (Anfragetelegramm) und dem anschließenden Senden eines Datentelegramms (Antworttelegramm) eine Verzögerungszeit $t_D$ einstellbar ist. Erfindungsgemäß erfüllt die Verzögerungszeit $t_D$ die Bedingung

$$t_D \geq t_B + (t_R + t_T) \cdot n,$$

wobei mit $t_B$ die Buszugriffszeit des Funkgeräts, mit $t_R$ die Buszugriffszeit des Repeaters, mit $t_T$ die Laufzeit eines Datentelegramms mit maximaler Länge und mit n die Anzahl der Repeater bezeichnet ist.

Durch die Erfindung werden Kollisionen zwischen den Datentelegrammen zuverlässig verhindert.

Ein Ausführungsbeispiel der Erfindung wird nachfolgend anhand einer Zeichnung näher erläutert. Hierin zeigen in schematischer Darstellung:

FIG 1     ein Funksystem mit Funkgeräten und einem Repeater;

FIG 2     den zeitlichen Verlauf der Datentelegramme bei einem Verfahren gemäß dem Stand der Technik, eingesetzt bei dem Funksystem gemäß FIG 1;

FIG 3     den zeitlichen Verlauf der Datentelegramme bei einem erfindungsgemäßen Verfahren, eingesetzt bei dem Funksystem gemäß FIG 1.

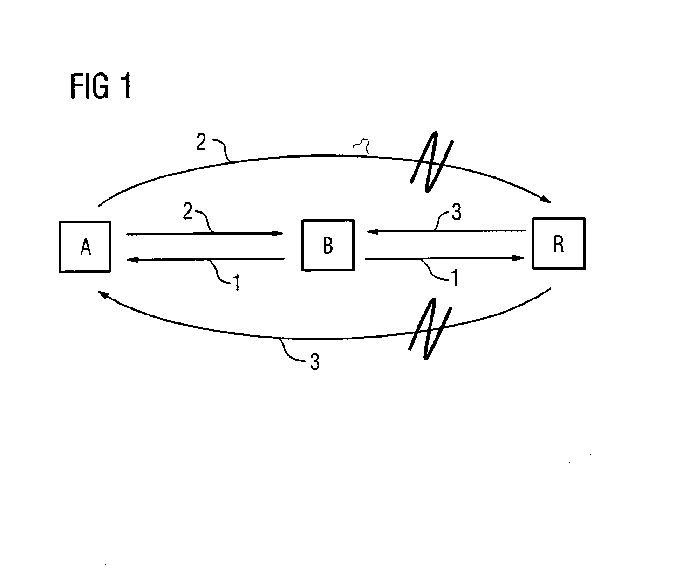

Das in FIG 1 beschriebene Funksystem umfasst eine Vielzahl von Funkgeräten (bidirektionale und unidirektionale Funkgeräte) sowie eine Vielzahl von Repeatern. Mit Hilfe von Repeatern kann die Übertragungsreichweite von Funkgeräten vergrößert werden. Aus Gründen der Übersichtlichkeit sind nur zwei bidirektionale Funkgeräte A und B sowie nur ein Repeater R dargestellt.

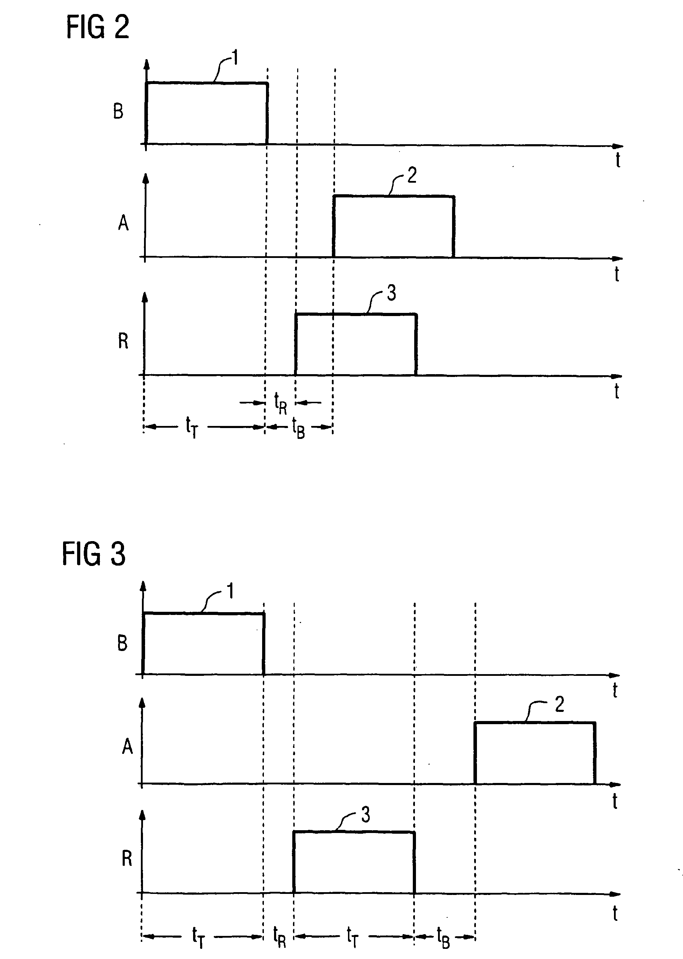

Das in FIG 1 gezeigte Funksystem wird zunächst nach einem Verfahren gemäß dem Stand der Technik betrieben. Der zu diesem Verfahren zugehörige zeitliche Verlauf der Datentelegramme ist in FIG 2 dargestellt.

Bei dem bekannten Verfahren zur Übermittlung von Datentelegrammen sendet beispielsweise das bidirektionale Funkgerät B direkt ein Datentelegramm 1 (Anfragetelegramm) an das bidirektionale Funkgerät A und an den Repeater R.

Das bidirektionale Funkgerät A empfängt das Anfragetelegramm 1 und sendet nach einer Buszugriffszeit $t_B$ ein Datentelegramm 2 (Antworttelegramm) an das bidirektionale Funkgerät B und an den Repeater R.

Der Repeater R empfängt das vom bidirektionalen Funkgerät B gesendete Anfragetelegramm 1 ebenfalls zum gleichen Zeitpunkt wie das bidirektionale Funkgerät A. Der Repeater R sendet nach einer Buszugriffszeit $t_R$ eine Wiederholung 3 des Anfragetelegramms 1 an die bidirektionalen Funkgeräte A und B sowie an weitere nicht dargestellte Funkgeräte.

Da zuerst der Repeater R den Bus belegt, ist die Buszugriffszeit $t_R$ des Repeaters R kleiner als die Buszugriffszeiten $t_B$ der bidirektionalen Funkgeräte A und B. Das Funkgerät A kann die vom Repeater R gesendete Wiederholung 3 nicht empfangen. Dadurch kommt es in der Übertragungsstrecke zwischen dem Repeater R und dem bidirektionalen Funkgerät A zur Kollision der Datentelegramme 2 und 3. (Wiederholung 3 des Anfragetelegramms 1 kollidiert mit dem Antworttelegramm 2). Die Störung der Übertragung zwischen Funkgerät A und Repeater R ist in FIG 1 mit einem schräg gestellten "N" gekennzeichnet.

Wird das in FIG 1 gezeigte Funksystem nach einer Ausführungsform gemäß dem zeitlichen Verlauf in FIG 3 betrieben, dann werden die vorstehend beschriebenen Kollisionen bei der Übermittlung von Datentelegrammen zuverlässig verhindert.

Aus Gründen der Übersichtlichkeit wird für die Beschreibung des Verfahrens gemäß FIG 3 davon ausgegangen, dass das in FIG 1 gezeigte Funksystem nur zwei bidirektionale Funkgeräte A und B und nur einen Repeater R aufweist. Für den Fachmann ist es jedoch klar, dass das erfindungsgemäße Verfahren nicht nur auf Funksysteme mit zwei bidirektionalen Funkgeräten und einem Repeater beschränkt ist.

Bei dem Verfahren gemäß FIG 3 sendet beispielsweise das bidirektionale Funkgerät B direkt ein Datentelegramm 1 (Anfragetelegramm) an das bidirektionale Funkgerät A und an den Repeater R.

Das bidirektionale Funkgerät A empfängt das Anfragetelegramm 1 und sendet erst nach einer Verzögerungszeit $t_D$ die ein Datentelegramm 2 (Antworttelegramm) an das bidirektionale Funkgerät B und an den Repeater R.

Der Repeater R empfängt das vom bidirektionalen Funkgerät B gesendete Anfragetelegramm 1 ebenfalls zum gleichen Zeitpunkt wie das bidirektionale Funkgerät A. Der Repeater R sendet nach einer Buszugriffszeit $t_R$ eine Wiederholung 3 des Anfragetelegramms 1 an die bidirektionalen Funkgeräte A und B.

Damit bei der Übermittlung der Datentelegramme 1, 2 und 3 keine Kollisionen auftreten, wird für die Verzögerungszeit $t_D$ erfindungsgemäß die folgende Bedingung festgelegt

$$t_D \geq t_B + (t_R + t_T) \cdot n,$$

wobei mit $t_B$ die Buszugriffszeit des Funkgeräts A, B, mit $t_R$ die Buszugriffszeit des Repeaters R, mit $t_T$ die Laufzeit eines Datentelegramms mit maximaler Länge und mit n die Anzahl der Repeater R bezeichnet ist.

Da das in FIG 1 dargestellte Funksystem nur einen Repeater aufweist (n = 1), reduziert sich die Formel auf

$$t_D \geq t_B + t_R + t_T.$$

Wie aus dem zeitlichen Verlauf gemäß FIG 3 ersichtlich ist, wird das Antworttelegramm 2 vom bidirektionalen Funkgerät A erst nach Ablauf der Verzögerungszeit $t_D$ gesendet, also erst dann, wenn der Repeater R die Wiederholung 3 des Anfragetelegramms 1 übermittelt hat.

Bei der erfindungsgemäßen Lösung werden damit Kollisionen zwischen dem Anfragetelegramm 1 (gesendet vom bidirektionalen Funkgerät B), dem Antworttelegramm 2 (gesendet vom bidirektionalen Funkgerät A) und der Wiederholung 3 (gesendet vom Repeater R) des Anfragetelegramms 1 zuverlässig vermieden.

Gemäß einer vorteilhaften Ausgestaltung der Erfindung kann man zusätzlich vorsehen, dass bei wenigstens einem Datentelegramm (z. B. Anfragetelegramm 1), das von wenigstens einem sendenden bidirektionalen Funkgerät (z. B. bidirektionales Funkgerät B) als Broadcast- oder in Punkt-zu-Punkt-Adressierung an wenigstens ein empfangsbereites bidirektionales Funkgerät (z. B. bidirektionales Funkgerät A) gesendet wird, die Übermittlung dieses Datentelegramms 1 wiederholt wird, wenn nach einer vorgebbaren Zeit (Timeout) kein Datentelegramm (z. B. Antworttelegramm 2) vom empfangsbereiten bidirektionalen Funkgerät A beim sendenden bidirektionalen Funkgerät B eingegangen ist.

## Patentansprüche

**1.** Verfahren zur Übermittlung von Datentelegrammen zwischen wenigstens zwei Funkgeräten (A, B) und wenigstens einem Repeater (R), wobei wenigstens ein Funkgerät (A, B) auf ein empfangenes Datentelegramm als Anfragetelegramm erst nach einer Verzögerungszeit mit einem Datentelegramm als Antworttelegramm antwortet, **dadurch gekennzeichnet, dass** sich bei Ausführung des Verfahrens nicht alle Funkgeräte (A, B) in Kommunikationsreichweite zum Repeater (R) befinden und die Verzögerungszeit ($t_D$) die Bedingung

$$t_D \geq t_B + (t_R + t_T) \cdot n$$

erfüllt, wobei mit $t_B$ die Buszugriffszeit des Funkgeräts (A, B), mit $t_R$ die Buszugriffszeit des Repeaters (R), mit $t_T$ die Laufzeit eines Datentelegramms mit maximaler Länge und mit n die Anzahl der Repeater (R) bezeichnet ist.

**2.** Verfahren nach Anspruch 1, **dadurch gekennzeichnet, dass** bei wenigstens einem Datentelegramm als Anfragetelegramm, das von wenigstens einem sendenden Funkgerät (A, B) als Broadcast- oder in Punkt-zu-Punkt-Adressierung an wenigstens ein empfangsbereites Funkgerät (B, A) gesendet wird, die Übermittlung dieses Datentelegramms wiederholt wird, wenn nach einer vorgebbaren Zeit kein Datentelegramm als Antworttelegramm vom empfangsbereiten Funkgerät (B, A) beim sendenden Funkgerät (A, B) eingegangen ist.

## Claims

**1.** Method for transmitting datagrams between at least two radio devices (A, B) and at least one repeater (R), whereby at least one radio device (A, B) only responds to a received datagram as a request telegram with a datagram as a response telegram after a delay time, **characterised in that**, when the method is executed, not all radio devices (A, B) are in communication range of the repeater (R) and the delay $t_D$ fulfils the condition

$$t_D \geq t_B + (t_R + t_T) \cdot n$$

whereby $t_B$ refers to the bus access time of the radio device (A, B), $t_R$ refers to the bus access time of the repeater (R), $t_T$ to the delay time of a datagram of maximum length and n refers to the number of repeaters (R).

**2.** Method according to claim 1, **characterised in that**, for at least one datagram as request telegram, which is sent by at least one sending radio device (A, B) as a broadcast or in point-to-point addressing to at least one ready-to-receive radio device (B, A), the transmission of this datagram is repeated if, after a predeterminable time, no datagram has arrived at the transmitting radio device (A, B) as a response telegram from the ready-to-receive radio device (B, A).

## Revendications

**1.** Procédé de transmission de télégrammes de données entre au moins deux appareils radio (A, B) et au moins un répéteur (R), au moins un appareil radio (A, B) ne répondant qu'après un temps de retard par un télégramme de données en tant que télégramme de réponse à un télégramme de données reçu en tant que télégramme de requête, **caractérisé en ce que**, lors de l'exécution du procédé, les appareils radio (A, B) ne se trouvent pas tous dans la portée de communication du répéteur (R) et le temps de retard ($t_D$) remplit la condition

$$t_D \geq t_B + (t_R + t_T) \cdot n$$

$t_B$ désignant le temps d'accès de bus de l'appareil radio (A, B), $t_R$ désignant le temps d'accès de bus du répéteur (R), $t_T$ désignant le temps de propagation d'un télégramme de données de longueur maximale et n désignant le nombre de répéteurs (R).

2.  Procédé selon la revendication 1, **caractérisé en ce que**, étant donné au moins un télégramme de données en tant que télégramme de requête qui est envoyé par au moins un appareil radio (A, B) émetteur en tant qu'adressage broadcast ou point à point à au moins un appareil radio (B, A) en état de réception, la transmission de ce télégramme de données est répétée si, au bout d'un temps prédéterminable, aucun télégramme de données en tant que télégramme de réponse n'est parvenu de l'appareil radio (B, A) en état de réception à l'appareil radio (A, B) émetteur.

## FIG 1

EP 1 473 864 B1

FIG 2

B

A

R

$t_R$

$t_T$   $t_B$

FIG 3

B

A

R

$t_T$   $t_R$   $t_T$   $t_B$

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0067103 A
- WO 0228004 A2